# EUROPEAN PATENT SPECIFICATION

(11) **EP 3 173 251 B1**
(45) Date of publication and mention of the grant of the patent: **01.03.2023**
(21) Application number: 16200514.4
(22) Date of filing: 24.11.2016
(51) Int. Cl.: B60C 1/00, C08L 7/00, C08L 23/22

(54) **RUBBER COMPOUND FOR TYRES COMPRISING RECYCLED CARBON BLACK**
GUMMI FÜR REIFEN ENTHALTEND RECYCELTEN RUSS
CAOUTCHOUC POUR PNEU COMPRENANT DU NOIR DE CARBONE RECYCLE

(30) Priority: 27.11.2015 IT IT20155971
(43) Date of publication of application: 31.05.2017
(73) Proprietor: Bridgestone Corporation, Tokyo 104-8340 (JP)
(72) Inventor: Forte, Gianluca, 00128 Roma (IT); Calzetta, Alessandra, 00128 Roma (IT)
(74) Representative: Marchetti, Alessio

(56) References cited:
- US-A- 5 723 531
- US-A1- 2010 249 353
- "A comparison of surface morphology and chemistry of pyrolytic carbon blacks with commercial carbon blacks", POWDER TECHNOLOGY, vol. 160, 2005, pages 190-193,
- Nedialko Delchev ET AL: "EFFECT OF THE MODIFIED SOLID PRODUCT FROM WASTE TYRES PYROLYSIS ON THE PROPERTIES OF STYRENE-BUTADIENE RUBBER BASED COMPOSITES", Nikolay Dishovsky 525 Journal of Chemical Technology and Metallurgy, 1 January 2014 (2014-01-01), pages 525-534, XP055719037, Retrieved from the Internet: URL:https://dl.uctm.edu/journal/node/j2014 -6/1-Dishovski_525.pdf [retrieved on 2020-07-29]
- PANTEA D ET AL: "Heat-treatment of carbon blacks obtained by pyrolysis of used tires. Effect on the surface chemistry, porosity and electrical conductivity", JOURNAL OF ANALYTICAL AND APPLIED PYROLYSIS, ELSEVIER BV, NL, vol. 67, 1 January 2003 (2003-01-01), pages 55-76, XP002677675, ISSN: 0165-2370, DOI: 10.1016/S0165-2370(02)00017-7

## Description

The present invention relates to rubber compounds for tyres comprising recycled carbon black obtained by pyrolysis of tyres, and to a method for increasing the surface reactivity of said carbon black recycled from pyrolysis.

For ecological reasons the need for a correct disposal and recycling of end-of-life tyres has long been felt. To this end solutions have been sought that are capable of recycling at least some of the components therein. One of the components of an end-of-life tyre that is desirable to recover for its subsequent re-use is carbon black, which is considered to be a high-end material.

The recycling of carbon black takes place by means of an end-of-life tyre pyrolysis process. Here and in the following description, by "carbon black from pyrolysis" is meant recycled carbon black obtained by the technique of used tyre pyrolysis. As is known to a person skilled in the art, the pyrolysis process produces recycled carbon black (carbon black from pyrolysis) that is devoid of functional groups on its surface *(*A comparison of surface morphology and chemistry of pyrolytic carbon blacks with commercial carbon blacks, Powder Technology 160 (2005) 190 - 193*)).*

Despite the fact that carbon black from pyrolysis finds application in various fields, it has been found that it exhibits, for the same surface area, reinforcing strength that is lower than that of first use carbon black (here and hereinafter "first use carbon black" refers to non-recycled carbon black). The lower reinforcing strength of carbon black from pyrolysis is due to its reduced surface activity towards the polymer base.

The low surface reactivity of carbon black from pyrolysis is a serious limitation to its use as a replacement, even partial, for first use carbon black.

In this respect, it has been experimentally proven that even the partial replacement of first use carbon black with carbon black from pyrolysis causes a noticeable deterioration in the mechanical properties of the compound, such as abrasion resistance, tensile strength, the modulus values M% etc.

As can be immediately reported, the possibility of using carbon black from pyrolysis in the preparation of compounds for tyres would pose a great advantage both in ecological and economic terms.

The Applicant has implemented a solution whereby it is possible to prepare rubber compounds for tyres wherein a part of the first use carbon black is replaced with carbon black from pyrolysis without incurring the disadvantages of the known art and, therefore, without entailing any deterioration as regards the mechanical properties of the compound itself.

Generally, in rubber compounds, the silane bonding agent is used in combination with silica in order both to facilitate the chemical interaction between the silica itself and the polymer base and to interact with the silanol groups inhibiting, thus, the formation of hydrogen bonds between the silica particles and the consequent formation of agglomerates which would lead to an inhomogeneous dispersion of the silica within the polymer base.

The object of the present invention is a rubber compound for tyres comprising a cross-linkable unsaturated-chain polymer base, carbon black, a silane bonding agent and a vulcanization system; said compound being characterized in that a portion of said carbon black is recycled carbon black obtained by pyrolysis of tyres and comprising hydroxyl and/or carboxyl groups on the surface thereof.

Here and hereinafter, vulcanization system refers to a package of ingredients comprising at least sulfur and accelerator compounds, which, in the preparation of the compound, are added in a final mixing stage and have the purpose of promoting the vulcanization of the polymeric base once the compound has been subjected to a vulcanizing temperature.

Here and hereinafter, the term "cross-linkable unsaturated-chain polymer base" refers to any natural or synthetic non-cross-linked polymer that is capable of assuming all of the chemical-physical and mechanical characteristics typically assumed by elastomers after cross-linking (vulcanization) using sulfur-based systems.

Preferably, the silane bonding agent is available in the compound in a total amount of between 0.5 and 20% in phr with respect to said recycled carbon black.

Preferably, said recycled carbon black is available in the compound in a total amount of between 5 and 100% in phr of the total carbon black. Total carbon black refers to the sum of the first use carbon black and the carbon black from pyrolysis.

Preferably, said recycled carbon black comprising hydroxyl and/or carboxyl groups on the surface thereof, is produced by means of a treatment using potassium permanganate under acid conditions.

Preferably, said acid conditions are due to the addition of nitric acid.

Another object of the present invention is a tyre portion being made with the compound of the present invention. Preferably, said tyre portion makes up the tread or sidewalls of the tyre.

A further object of the present invention is the use thereof in rubber compounds for tyres and in combination with a silane bonding agent, of recycled carbon black obtained by pyrolysis of tyres and comprising hydroxyl and/or carboxyl groups on the surface thereof.

Still another object of the present invention is a method for the treatment of recycled carbon black obtained by pyrolysis of tyres; said treatment method being characterized by the fact that the recycled carbon black is subjected to an oxidation process designed to produce hydroxyl and/or carboxyl groups on the surface thereof.

Preferably, said oxidation process requires that the recycled carbon black be caused to react with potassium permanganate under acid conditions. Preferably, the acid conditions are due to the addition of nitric acid.

For a better understanding of the invention, the following examples are used for illustrative and nonlimiting purposes.

### EXAMPLES

Four comparison compounds (A-D) and a compound (E) according to the method of the present invention were prepared.

In the description that follows, "untreated carbon black from pyrolysis" refers to a recycled carbon black obtained from a tyre pyrolysis process but not subjected to a treatment that is such to produce functional hydroxyl and/or carboxyl groups on the surface thereof; whilst, "treated carbon black from pyrolysis" refers to a recycled carbon black obtained from a tyre pyrolysis process and subjected to a treatment that is such to produce functional hydroxyl and/or carboxyl groups on the surface thereof.

The comparison rubber composition A comprises first use carbon black as the only reinforcing filler and is therefore devoid of both carbon black from pyrolysis and a silane bonding agent; the comparison compound B differs from compound A in the presence of untreated carbon black from pyrolysis as a substitute for a portion of the first use carbon black; the comparison compound C differs from the comparison compound B in that, together with the untreated carbon black from pyrolysis, the silane bonding agent is also present; the comparison compound D differs from compound A in the presence of treated carbon black from pyrolysis as a substitute for a portion of the first use carbon black; lastly, the compound of the invention F, conforming to the dictates of the present invention, includes both treated carbon black from pyrolysis and a silane bonding agent.

All of the example compounds include the same amount in phr of total carbon black (first use carbon black + carbon black from pyrolysis).

The example compounds were obtained according to the procedure below:
- preparation of the compounds -
(1st mixing step)

Before mixing began, a mixer with tangential rotors and with an internal volume of 2 liters was loaded with the cross-linkable polymer base, the first use carbon black, the carbon black from pyrolysis (where required) and the silane binder (where required), reaching a filling factor of between 66-72%.

The mixer was operated at a speed of between 40-60 revolutions/minute, and the mixture thus formed was discharged once a temperature of between 140-160°C had been reached.

### (2nd mixing step)

The mixture obtained from the previous step was again worked in a mixer that was operated at a speed of between 40-60 revolutions/minute and, thereafter, discharged once it had reached a temperature of between 130-150°C.

### (final mixing step)

Sulfur, the vulcanization agents and antioxidants were added to the mixture obtained from the previous step, the reaching a filling factor of between 63-67%.

The mixer was operated at a speed of between 20-40 revolutions/minute, and the mixture thus formed was discharged once a temperature of between 100-110°C had been reached.

Table I shows the compositions in phr of the five compounds.

**TABLE I**

| | A | B | C | D | E |
|---|---|---|---|---|---|
| NR | 50.0 | 50.0 | 50.0 | 50.0 | 50.0 |
| BR | 50.0 | 50.0 | 50.0 | 50.0 | 50.0 |
| First use carbon black | 50 | 40 | 40 | 40 | 40 |
| Untreated carbon black from pyrolysis | -- | 10 | 10 | -- | -- |
| Treated carbon black from pyrolysis | -- | -- | -- | 10 | 10 |
| Silane bonding agent | -- | -- | 0.7 | -- | 0.7 |
| Sulfur | 1 | 1 | 1 | 1 | 1 |
| Zinc oxide | 3 | 3 | 3 | 3 | 3 |
| Stearic acid | 2 | 2 | 2 | 2 | 2 |
| Accelerator | 0.7 | 0.7 | 0.7 | 0.7 | 0.7 |
| Antioxidant | 3 | 3 | 3 | 3 | 3 |

NR is a 1,4-cis polyisoprene rubber of natural origin.

BR is a butadiene rubber with a 1,4-cis content of at least 40%.

The first use carbon black is classified under the symbol N330.

The untreated carbon black from pyrolysis is derived from carbon black obtained by the pyrolysis of end-of-life tyres and has a surface area in the range 30-80 m²/g.

The treated carbon black from pyrolysis is derived from the untreated carbon black from pyrolysis that has been subjected to an oxidation process as reported below.

The silane binding agent used is Si75.

The antioxidant is trimethylquinoline (TMQ).

The accelerant is N-tert-butyl-2-benzothiazyl sulfenamide (TBBS).

A procedure used for the surface activation of the carbon black from pyrolysis is given below as an example.

100 grams of untreated carbon black from pyrolysis were treated for 24 hours, at room temperature and under moderate agitation, in 500 ml of a 1N of KMnO₄ solution and at a pH of 1 by the addition of nitric acid. Subsequently, the carbon black from pyrolysis thus treated was left to stand, and the supernatant solution was removed to be replaced with distilled water. This procedure was repeated three times. The solution thus obtained was filtered under vacuum, and the carbon black from pyrolysis thus treated was washed on the filter with distilled water. At this point, the treated carbon black from pyrolysis, after having been left to dry directly on the filter, was left in an oven at 60°C for one day.

It was noted that the carbon black from pyrolysis, as a result of the above oxidation process, included on its surface a plurality of hydroxyl and carboxyl groups.

From the above compounds, in order to verify the advantages obtained from the use of carbon black from pyrolysis treated according to the invention, respective samples were derived which were subjected to tests with regard to their mechanical properties.

In particular, properties relating to the tensile strength, modulus at 300% and resistance to crack propagation were evaluated.

The mechanical properties were measured in accordance with the ASTM D412C standard.

Furthermore, a parameter referred to as "BOUND RUBBER" was measured which is a chemical-physical polymer-filler interaction indicator; the test is performed on non-vulcanized samples determining the non-solubilized fraction of compound therein after a treatment in THF for 24 hours at room temperature.

The results obtained from the tests above are given in Table II in indexed form with respect to the results obtained with compound A.

**TABLE II**

| | A | B | C | D | E |
|---|---|---|---|---|---|
| Tensile strength | 100 | 95 | 95 | 90 | 100 |
| Modulus at 300% | 100 | 80 | 80 | 75 | 100 |
| Resistance to crack propagation | 100 | 90 | 90 | 90 | 105 |
| Bound rubber | 100 | 90 | 90 | 85 | 100 |

From the results shown in Table II it is clear that the compound obtained according to the dictates of the present invention (the combined use of a silane bonding agent with treated carbon black from pyrolysis) not only manages to recuperate the disadvantages due to the partial replacement of the first use carbon black with carbon black from pyrolysis, but it also exhibits some improvements in terms of crack propagation compared to the use of first use carbon black only.

It is important to note that the use of treated carbon black from pyrolysis according to the invention only ensures the benefits sought if it is combined with a silane bonding agent. In fact, the results compared to the comparison compound D demonstrate that the carbon black from pyrolysis treated according to the invention, but without the presence of a silane bonding agent, not only leads to no improvement, but also exhibits a deterioration in the mechanical properties compared to the comparison compound B (untreated carbon black from pyrolysis).

In addition, the compound C results show that the use of a silane binding agent in combination with untreated carbon black from pyrolysis does not lead to any improvement over the exclusive use of the latter.

The invention, that is the object of the present invention, provides an opportunity to use carbon black from pyrolysis without compromising the mechanical properties of the compound.

As is immediately revealed, the possibility offered by the present invention involves a major advantage in ecological terms. In fact, thanks to the present invention, it will be possible to use carbon black derived from end-of-life tyres in order to prepare new tyres.

Finally, despite the fact that the surface activation treatment of carbon black from pyrolysis necessarily implies an additional expense, the possibility however of using carbon black from pyrolysis, even if properly treated, as a substitute for part of the first use carbon black, still represents an economic advantage.

## Claims

1. A rubber compound for tyres comprising a cross linkable unsaturated chain polymer base, carbon black, a silane bonding agent, and a vulcanization system; said compound being **characterized in that** a part of carbon black is recycled carbon black obtained by pyrolysis of tyres and comprising, on its surface, hydroxyl and/or carboxyl groups.

2. The rubber compound for tyres according to claim 1, **characterized in that** the silane bonding agent is available in the compound in a quantity ranging from 0.5 to 20 % in phr relative to said recycled carbon black.

3. The rubber compound for tyres according to claim 1 or 2, **characterized in that** the recycled carbon black is available in the compound in a quantity ranging from 5 to 100 % in phr of the overall carbon black.

4. The rubber compound for tyres according to any of the previous claims, **characterized in that** said recycled carbon black is obtained by means of a treatment with potassium permanganate under acid conditions.

5. A tyre portion, **characterized in that** it is manufactured with the compound according to any of the previous claims.

6. The tyre portion according to claim 5, **characterized in that** it makes up the tread or the sidewalls of the tyre.

7. A use, in rubber compounds for tyres according to any of the claims 1 to 4 and in combination with a silane bonding agent, of recycled carbon black obtained by pyrolysis of tyres and comprising on its surface hydroxyl and/or carboxyl groups.

8. A treatment method of recycled carbon black obtained by pyrolysis of tyres and to be used in rubber compounds for tyres according to any of the claims 1 to 4; said treatment method being **characterized in that** the recycled carbon black is subject to an oxidation process, which is used to obtain hydroxyl and/or carboxyl groups on the surface thereof.

9. The method according to claim 8, **characterized in that** in said oxidation process the recycled carbon black obtained by pyrolysis of tyres is caused to react with potassium permanganate under acid conditions.

10. The method according to claim 9, **characterized in that** said acid conditions are due to the addition of nitric acid.

## Patentansprüche

1. Eine Gummimischung für Reifen, umfassend eine vernetzbare ungesättigte Polymerkettenbasis, Ruß, ein Silanhaftmittel und ein Vulkanisationssystem; die Mischung **dadurch gekennzeichnet, dass** ein Teil von Ruß wiederverwerteter Ruß ist, der durch Pyrolyse von Reifen erhalten wird, und umfassend, auf seiner Oberfläche, Hydroxyl- und/oder Carboxylgruppen.

2. Gummimischung für Reifen nach Anspruch 1,
**dadurch gekennzeichnet, dass** das Silanhaftmittel in der Mischung in einer Menge in dem Bereich von 0,5 bis 20 % in phr relativ zu dem wiederverwerteten Ruß vorhanden ist.

3. Gummimischung für Reifen nach Anspruch 1 oder 2,
**dadurch gekennzeichnet, dass** der wiederverwertete Ruß in der Mischung in einer Menge in dem Bereich von 5 bis 100 % in phr des gesamten Rußes vorhanden ist.

4. Gummimischung für Reifen nach einem der vorhergehenden Ansprüche, **dadurch gekennzeichnet, dass** der wiederverwertete Ruß mittels einer Behandlung mit Kaliumpermanganat unter sauren Bedingungen erhalten wird.

5. Reifenabschnitt, **dadurch gekennzeichnet, dass** er mit der Mischung nach einem der vorstehenden Ansprüche hergestellt wird.

6. Reifenabschnitt nach Anspruch 5, **dadurch gekennzeichnet, dass** er die Lauffläche oder die Seitenwände des Reifens bildet.

7. Verwendung in Gummimischungen für Reifen nach einem der Ansprüche 1 bis 4 und in Kombination mit einem Silanhaftmittel von wiederverwertetem Ruß, der durch Pyrolyse von Reifen erhalten wird und umfassend, auf seiner Oberfläche, Hydroxyl- und/oder Carboxylgruppen.

8. Ein Behandlungsverfahren von wiederverwertetem Ruß, der durch Pyrolyse von Reifen erhalten wird und in Gummimischungen für Reifen nach einem der Ansprüche 1 bis 4 verwendet werden soll; das Behandlungsverfahren **dadurch gekennzeichnet, dass** der wiederverwertete Ruß einem Oxidationsprozess unterliegt, der verwendet wird, um Hydroxyl- und/oder Carboxylgruppen auf der Oberfläche davon zu erhalten.

9. Verfahren nach Anspruch 8, **dadurch gekennzeichnet, dass** in dem Oxidationsprozess der wiederverwerteter Ruß, der durch Pyrolyse von Reifen erhalten wird, veranlasst wird, mit Kaliumpermanganat unter sauren Bedingungen zu reagieren.

10. Verfahren nach Anspruch 9, **dadurch gekennzeichnet, dass** die Säurebedingungen auf die Zugabe von Salpetersäure zurückzuführen sind.

## Revendications

1. Composé de caoutchouc pour pneus comprenant une base polymère à chaîne insaturée réticulable, du noir de carbone, un agent de liaison silane, et un système de vulcanisation ; ledit composé étant **caractérisé en ce qu'**une partie de noir de carbone est du noir de carbone recyclé obtenu par pyrolyse de pneus et comprenant, sur sa surface, des groupes hydroxyle et/ou carboxyle.

2. Composé de caoutchouc pour pneus selon la revendication 1,
**caractérisé en ce que** l'agent de liaison silane est disponible dans le composé en une quantité allant de 0,5 à 20 % en pcc par rapport audit noir de carbone recyclé.

3. Composé de caoutchouc pour pneus selon la revendication 1 ou 2, **caractérisé en ce que** le noir de carbone recyclé est disponible dans le composé en une quantité allant de 5 à 100 % en pcc du noir de carbone global.

4. Composé de caoutchouc pour pneus selon l'une quelconque des revendications précédentes, **caractérisé en ce que** ledit noir de carbone recyclé est obtenu au moyen d'un traitement avec du permanganate de potassium dans des conditions acides.

5. Portion de pneu **caractérisée en ce qu'**elle est fabriquée avec le composé selon l'une quelconque des revendications précédentes.

6. Portion de pneu selon la revendication 5, **caractérisée en ce qu'**elle représente la bande de roulement ou les flancs du pneu.

7. Utilisation, dans des composés de caoutchouc pour pneus selon l'une quelconque des revendications 1 à 4 et en combinaison avec un agent de liaison silane, de noir de carbone recyclé obtenu par pyrolyse de pneus et comprenant sur sa surface des groupes hydroxyle et/ou carboxyle.

8. Procédé de traitement de noir de carbone recyclé obtenu par pyrolyse de pneus et à utiliser dans des composés de caoutchouc pour pneus selon l'une quelconque des revendications 1 à 4 ; ledit procédé de traitement étant **caractérisé en ce que** le noir de carbone recyclé est soumis à un processus d'oxydation, qui est utilisé pour obtenir des groupes hydroxyle et/ou carboxyle sur la surface de celui-ci.

9. Procédé selon la revendication 8, **caractérisé en ce que** dans ledit processus d'oxydation le noir de carbone recyclé obtenu par pyrolyse de pneus est amené à réagir avec du permanganate de potassium dans des conditions acides.

10. Procédé selon la revendication 9, **caractérisé en ce que** lesdites conditions acides sont dues à l'addition d'acide nitrique.
